# EUROPEAN PATENT APPLICATION

(11) **EP 2 141 882 A1**
(43) Date of publication of application: **06.01.2010**
(21) Application number: 08300231.1
(22) Date of filing: 04.07.2008
(51) Int. Cl.: H04L 29/06, H04N 7/58

(54) **System and process for broadcasting a multimedia content through a telecommunication network**

(71) Applicant: RENAULT S.A.S., 92100 Boulogne Billancourt (FR)
(72) Inventor: Eldjendoubi, Mohamed, 92310, SEVRES (FR); Jacono, François, 78470, VAUX-SUR-SEINE (FR); Letellier, Julien, 75020, PARIS (FR)

(57) **Abstract**

The invention relates to broadcasting a multimedia content through a communication network (2); said multimedia content comprising a stream of multimedia data and associated additional data to be broadcast together with the multimedia data.
The system used comprises means for selecting a first file containing said multimedia data and a second file containing said additional data and means for merging the selected first and second files in a metafile having links to the selected first and second files.
It further comprises a streaming server (6) in which is stored the metafile.

## Description

The present invention relates to multimedia broadcasting systems, in particular broadcasting systems intended to broadcast an audio-video stream together with additional data such as texts or captions, in synchronism with the audio-video stream.

Some companies, and in particular the applicant, provides its employees with internal networks, permitting access to a blog.

A blog is website maintained by a manager providing text, images and videos on particular topics. The blog can be accessed using the network architecture of the company and, as a case maybe, through the internet network, and using standardized and locked employees computers having a special configuration. Computer standardization simplifies the maintenance, software development and downloading, given the fact that nearly all the configurations are identical. Computer control locking reduces the number of accessible technologies, since a software that is not beforehand compatible with the standard configurations cannot be installed.

Besides, open space offices or some workshops in a company factory or in a company dealer subsidiary prevent from accessing a blog content comfortably. This is in particular the case when the content access through the blog is provided by way of an audio or video channel. Sounds can disturb or annoy neighbors or, more simply, cannot be audible at all.

In addition, deaf people or hearing-impaired people cannot watch a video blog in an optimal manner.

This is the reason why video blogs or audio blogs accessed through employees computers provide captions in synchronism with a displayed multimedia stream to provide the text of a showed audio portion to those who may have trouble to hear it.

In addition, generally speaking, a displayed video content can be provided with textual data to highlight important information relating to the content shown.

Different approaches can be used to broadcast an audio and/or a video content together with additional data, such as caption data.

The most usual technique is the matting of subtitles directly on the video. In other words, caption data are integrated in the multimedia file. However, when the company network is worldwide, subtitles should be accessed in different languages. Accordingly, one video must be provided for each language, such that for each topic, a number of videos corresponding to the number of intended languages must be provided and stored.

It has been noticed that, for large companies, two topics can be entered per week, which approximately corresponds to eighty subjects per year. Taking into consideration the number of languages for a worldwide company, the number of stored videos increases rapidly and can thus become huge, which increases the risks of having an error when naming files and when creating required links to servers in which contents are stored.

In addition, due to the huge storage capacity required for such techniques, storage costs increase for the servers of the company.

It has also been noticed that when a modification of the caption must be made, even when considering a slightest modification of a simple character, it is necessary to amend the final file which leads to important processing time for computers.

Furthermore, it has been noticed that matting techniques, in which subtitles are directly provided in the video content, imply to restart a video when a user wants to change the caption language or, generally speaking, wants to modify the additional data provided in synchronism with a video and/or audio content.

A second technology that can be considered is a conventional technology used for authoring DVDs. It consists in making VTS ("Video Tile set") files, joining steams (audio, video, sub-titles, format,...). The thus created file, usually called VOB ("Video Object"), contains the sound track, the video format and size and eventually the captions. To make a DVD, an editor is needed to realize authoring.

In view of the foregoing, the object of the invention is to overcome the drawbacks associated with the techniques according to the state of the art.

In particular, one object of the invention is to provide a multimedia broadcasting system in which it is possible to link data, such as caption data, to an audio and/or video content and permitting in addition to modify the displayed additional data without requiring to re-start the video stream.

A further object of the present invention is to provide a multimedia broadcasting system permitting to reduce the storage costs.

The invention thus proposes a system for broadcasting a multimedia content through a telecommunication network, said multimedia content comprising a stream of multimedia data and associated additional data to be broadcast together with the multimedia data, comprising means for selecting a first file containing said multimedia data and a second file containing said multimedia data, and means for merging the selected first and second files in a metafile having links to the selected first and second files.

It comprises in addition a streaming server in which are stored the thus created metafiles.

The invention thus proposes a broadcasting technique permitting access through a telecommunication network to a multimedia data file, on the one hand, and additional data, such as text data, on the other hand, said multimedia data files and additional data files being separate and unconnected and being broadcast by streaming.

On the contrary to broadcasting by downloading, a streaming technology permits to deliver a multimedia content keeping control through control messages transmitted between the media player and the streaming server.

As a matter of fact, unlike web servers which provide a multimedia content through downloading, and which start the multimedia stream damping according to the capacity of the network, during streaming, streaming servers open a conversation with the media player to transfer the multimedia content and to transfer control messages between the player and the server.

It is thus possible to control, amend or delete captions even during broadcasting.

In addition, storage costs are greatly reduced.

In one embodiment, the broadcasting system further comprises first storage means for storing a set of a multimedia files and second storage means for storing a set of additional data.

According to yet another feature of the invention, the multimedia data comprise video and/or audio data.

Said additional data comprise, for example, a set of text data intended to be merged with selected multimedia data, said set of text data comprising caption data in different languages intended to be selectively merged with a selected multimedia data.

The broadcasting system may further comprise a user interface adapted to modify in real time a selection of said second file during streaming of the multimedia content.

For example, in one embodiment, the multimedia data comprises MPEG encoded data, such as data in the WMA^{®} or the WMV^{®} format.

The additional data may comprise data written under a structured markup language such as Synchronized Multimedia. Integration Language (SMIL).

For example, the metafile is an eXtensible Markup Language metafile such as an Advanced Stream Redirector (ASX) file.

According to another aspect, the invention provides a process for broadcasting a multimedia content through a telecommunication network, said multimedia content comprising a stream of multimedia data and associated additional data to be broadcast together with the multimedia data.

The process according to the invention comprises the following steps:
- selecting a first file containing said multimedia data and a second file containing said associated additional data ;
- merging the selected first and second files in a metafile having links to the selected first and second files; and
- streaming the merged files.

According to said process, the multimedia data may comprise video and/or audio data.

According to another feature of this process, said additional data comprise a set of text data comprising caption data in different languages, said selection step comprising selecting caption data in said languages for selected multimedia data.

The process may further comprise a step of changing the selected additional data during streaming.

For example, the multimedia data comprises MPEG encoded data such as data in the WMV^{®} or the WMA^{®} format.

According to this process, the additional data may in addition comprise data written under a structured markup language such as a Synchronized Multimedia Integration Language (SMIL).

According to yet another feature of the process according to the invention, the metafile may be an eXtensible Markup Language metafile such as an Advanced Stream Redirector (ASX) file.

Other features and advantages will become apparent from the following description, given only by way of example and in view of the attached drawings in which:
- figure 1 illustrates the general architecture of a broadcasting system according to the invention;
- figure 2 illustrates the steps of the broadcasting process according to the invention;
- figure 3 shows the interface used to select the first and second files ; and
- figure 4 illustrates the merging step.

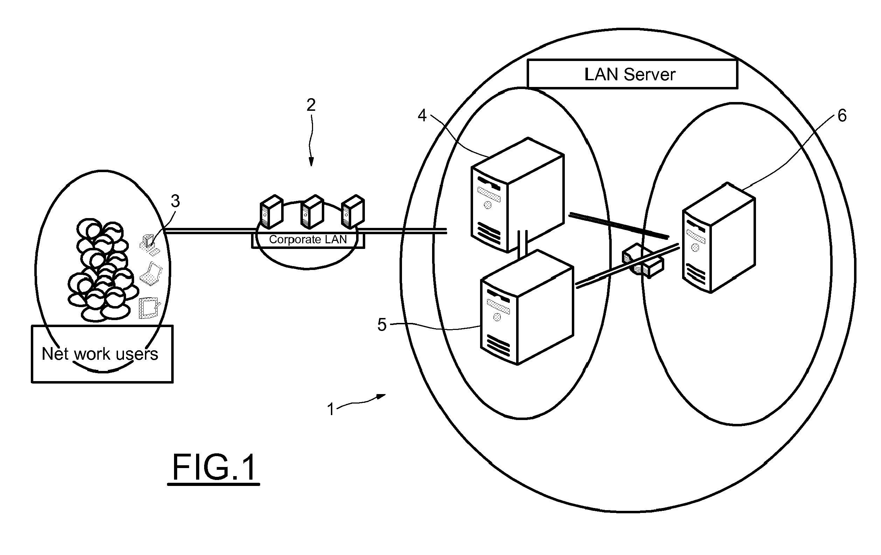

Reference is now made to figure 1, illustrating the general architecture of a broadcasting system according to the invention.

This system, denoted by numeral reference 1, is intended to provide access to a multimedia content through a telecommunication network 2, such as an internal telecommunication network of a company, to end user stations, such as 3, constituted in the illustrated example by employees computers.

For example the telecommunication network 2 is a Local-Area Network (LAN). It may use different protocols such as MMS^{®} (Microsoft Media Service"), a streaming protocol, RTSP ("Real-Time Streaming Protocol") allowing to control multimedia streams delivered on an IP network or HTTP ("Hypertext Transfer Protocol") commonly used to transfer information on internet.

As concerns the end-user stations, the computers are provided with a digital media player adapted to be used for playing audio, video and viewing images, such as the media player WMP^{®} (Windows Media Player) developed by Microsoft^{®}.

As illustrated, the broadcasting system essentially comprises a first server 4 intended to store files of multimedia data and a second server 5 intended to store additional data to be broadcast together with multimedia data stored in the first server 4.

In the illustrated example, the broadcasting system 1 is used to provide on a blog a multimedia content by streaming in the form of a audio and/or video content associated with captions that can be controlled during streaming.

In particular, the broadcasting system is intended to broadcast such a multimedia content by streaming in which it is possible to modify the language of the captions without requiring to re-start a video.

However, generally speaking, the invention also relates to broadcasting a multimedia content together with additional data that can be modified or deleted during broadcasting.

The first server 4 is used to store any multimedia stream entered by any authorized user, the second server being used to store captions or, generally speaking, text data, in all available languages.

The broadcasting system comprises in addition a third server 6 intended to provide access to any authorized user for editing a multimedia content by selecting one multimedia file from the first server 4 and one caption file from the second server 5, and to merge the selected files in a metafile linking to the corresponding addresses at the first and second servers 4 and 5

The third server is also intended to be access by any end-user for playing a requested file and to permit to exchanging or to deleting captions during streaming.

For example, the multimedia data stored in the first server 4 are MPEG encoded data, such as the compressed audio or video file format WMV^{®} ("Windows Media Video") or WMA^{®} ("Windows Media Audio") developed by Microsoft^{®}. Such formats are particularly useful to be played by a streaming using the above-mentioned Windows Media Player^{®} at the end user side.

However, any other appropriate multimedia container format can be used instead, such as the AVI ("Audio Video Interleave") or the Realaudio or the Realvideo proprietary formats developed by RealNetworks^{®}.

As concerns data stored in the second server 5, caption files are returned using a Structured Markup Language such as the so-called Synchronized Multimedia Integration Language (SMIL). This language is commonly used for defining a markup for timing, lay out, animations, ... and is particularly intended to create documents using a text editor. The thus created files contain the .smi extension.

However, other conventional formats using other file extensions, such as .sub or .srt generally used to encapsulate a caption file within a multimedia file, can also be used.

At last, the third server provides a tool used to link the WMV or WMA files, and the SMIL file. It is used to create an ASX file specifying the address of the selected file and linking said selected files.

As known, such an ASX format is an XML metafile designed to store a list of multimedia files to be played or streamed on a streaming video server. Each element of such an ASX file is commonly used to define a particular action to Windows Media Player^{®}.

Accordingly, when an end user decides to change a language of a caption, the thus created ASX containing information linking the caption file and the multimedia file recovers the caption data in the selected language from the second server 5 to change accordingly the broadcast conditions as the video plays.

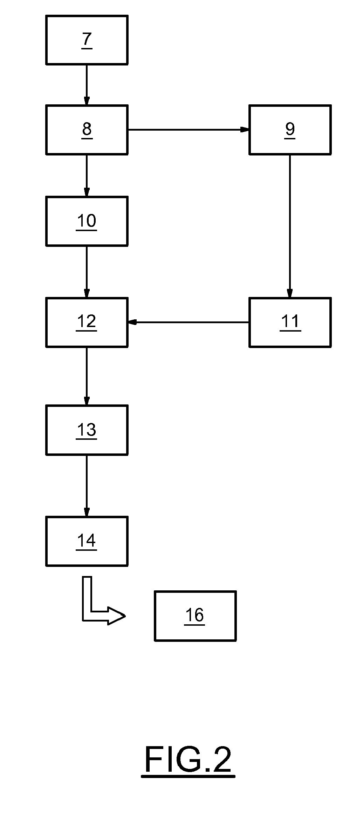

Reference is now made to figure 2, illustrating the main steps of the broadcasting process according to the invention.

During a first step 7, a video content is created on a specific topic by a film crew.

Besides, during a step 8, corresponding texts are edited using any editing software. The thus edited captions or text data are also edited in a number X of languages (step 9).

During further step 10, the video and/or audio streams are encoded in the WMV format.

In parallel, from the edited captions, SAMI files, having the extension .SMI, are created.

The thus created video file is stored in first server 4 and the SAMI files are stored in the second server 5 at specific addresses.

During step 12, any authorized user, after being lodged in an interface provided by the third server 6, chooses the video file saved in the WMV format and the subtitle file saved in the SMI format he wants to stream from the first and second servers 4 and 5.

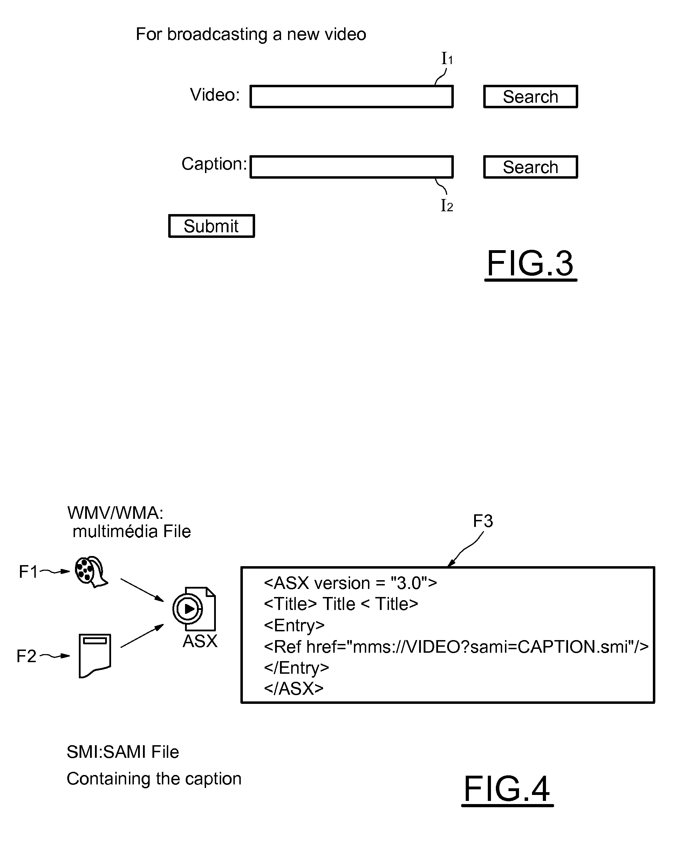

For that purpose, referring to figure 3, an interface may be provided, said interface having a first icon I1 for choosing a multimedia file in the first server 4 and selecting the address of the file therein, and a second icon I2 for choosing a corresponding subtitle file in the second server 5 and selecting the file address therein.

During step 12, the third server 6 automatically associates the two selected files, and delivers an ASX file merging the two selected files and linking to their addresses in the first and second servers 4 and 5.

Referring to figure 4, for example, an ASX file F3 is created from a first multimedia file F1 and from the second SAMI file F2.

The ASX file F3 contains links to the multimedia file and to the corresponding caption file in which are stored subtitles in all available languages.

As known in figure 4, an ASX file contains several sections, namely:
- "*Title*" is a text string specifying the title for the ASX file;
- "*Entry*" defines the content of the merged files and specifies hyperlinks where the corresponding files can be retrieved.

In the very simple illustrated example, the ASX file thus points to two files, the one named "VIDEO" in the MMS format, and the other, named "CATION" in the SMIL format. Although not illustrated, it in addition contains the links to the servers where the corresponding files may be retrieved.

During the next step 14, the HTTP links pointing on the web server are posted in the back office part of the blog, namely on the part accessed only by the persons authorized to enter a new multimedia content.

At last, the thus created multimedia content is displayed in the front end of the blog, namely on the part that can be accessed by any end-user in the form of video and subtitles in two separate but synchronized windows.

The user can thus choose the language for the captions and, if required, modify or, on the contrary, cancel any subtitle during streaming (step 16).

When a particular language is selected or, generally speaking, when a modification in the format of the additional data as displayed is requested by the end-user, the media player at the end-user side controls display of the selected caption data by reading the SAMI file data in the selected language.

In view of the foregoing, the invention provides a broadcast system and a broadcast process permitting to store a unique video file, whatever the language to display is. Accordingly, a substantial storage profit in terms of space can be obtained.

In addition, it is possible to watch a video whatever the office environment, mother tong or handicap of the person are. The user is thus able to hear soundtracks of video, read subtitles in one of the languages he or she understands, to cut the sound off and watch nevertheless the video without any lack of understanding.

At last, only simple back office systems for the video blog are required for the administrator.

The automation of the association, between audio-video streams and caption streams and the delivery of a simple HTTP-like address where the ASX file is stored, that the administrator just copy and forwards to the back office interface, simplify the posting or publication.

## Claims

1. System for broadcasting a multimedia content through a communication network, said multimedia content comprising a stream of multimedia data and associated additional data to be broadcast together with the multimedia data, **characterized in that** it comprises means for selecting a first file containing said multimedia data and a second file containing said additional data and means for merging the selected first and second files in a metafile having links to the selected first and second files, and **in that** it further comprises a streaming server (6) in which is stored the metafile.

2. System according to claim 1, **characterized in that** it further comprises first storage means (4) for storing a set of multimedia files and second storage means (5) for storing a set of additional data.

3. System according to claim 1 or 2, **characterized in that** said multimedia data comprises video and/or audio data.

4. System according to any of claims 1 to 3, **characterized in that** said additional data comprises a set of text data intended to be merged with selected multimedia data, said set of text data comprising caption data in different languages intended to be selectively merged with a selected multimedia data.

5. System according to any of claims 1 to 4, **characterized in that** it comprises a user interface adapted to modify in real time a selection of said second file during streaming of the multimedia content.

6. System according to any of claims 1 to 5, **characterized in that** the multimedia data comprises MPEG encoded data, such as data in the WMA^{®} or the WMV^{®} format.

7. System according to any of claims 1 to 6, **characterized in that** the additional data comprise data writer under a structured markup language such as a Synchronized Multimedia Integration Language (SMIL).

8. System according to any of claims 1 to 7, **characterized in that** the metafile is an extensible Markup Language metafile such as an Advanced Stream Redirector (ASX) file.

9. Process for broadcasting a multimedia content through a telecommunication network, said multimedia content comprising a stream of multimedia data and associated additional data to be broadcast together with the multimedia data, comprising:
- selecting a first file containing said multimedia data and a second file containing said associated additional data;
- merging the selected first and second files in a metafile having links to the selected first and second files; and
- streaming the merged files.

10. Process according to claim 9, **characterized in that** said multimedia data comprises video and/or audio data.

11. Process according to claim 9 or 10, **characterized in that** said additional data comprises a set of text data comprising caption data in different languages, said selection step comprising selecting caption data in said languages for a selected multimedia data.

12. Process according to any of claims 9 to 11, **characterized in that** it further comprises the step of changing the selected additional data during streaming.

13. Process according to any of claims 9 to 12, **characterized in that** the multimedia data comprises MEPG encoded data such as data in the WMV^{®} or WMA^{®} format.

14. Process according to any of claims 6 to 13, **characterized in that** the additional data comprises data written under a structured markup language such as a Synchronized Multimedia Integration Language (SMIL).

15. Process according to any of claims 9 to 14, **characterized in that** the metafile is an eXtensible Markup Language metafile such as an Advanced Stream Redirector (ASX) file.

## Amended claims

### Amended claims in accordance with Rule 137(2) EPC.

**1.** System for broadcasting a multimedia content through a communication network, said multimedia content comprising a stream of multimedia data and associated additional data to be broadcast together with the multimedia data, said system comprising means for selecting a first file containing said multimedia data and a second file containing said additional data and means for merging the selected first and second files in a metafile having links to the selected first and second files, and further comprising a streaming server (6) in which is stored the metafile **characterized in that** said system comprises a user interface adapted to modify in real time a selection of said second file during streaming of the multimedia content.

**2.** System according to claim 1, **characterized in that** it further comprises first storage means (4) for storing a set of multimedia files and second storage means (5) for storing a set of additional data.

**3.** System according to claim 1 or 2, **characterized in that** said multimedia data comprises video and/or audio data.

**4.** System according to any of claims I to 3, **characterized in that** said additional data comprises a set of text data intended to be merged with selected multimedia data, said set of text data comprising caption data in different languages intended to be selectively merged with a selected multimedia data.

**5.** System according to any of claims I to 4, **characterized in that** the multimedia data comprises MPEG encoded data.

**6.** System according to the preceding claim, **characterized in that** the MPEG encoded data is in the WMA^{®} or the WMV^{®} format.

**7.** System according to any of claims 1 to 6, **characterized in that** the additional data comprise data written under a structured markup language.

**8.** System according to the preceding claim, **characterized in that** the structured markup language is a Synchronized Multimedia Integration Language,"SMIL".

**9.** System according to any of claims 1 to 8, **characterized in that** the metafile is an extensible Markup Language metafile.

**10.** Process for broadcasting a multimedia content through a telecommunication network, said multimedia content comprising a stream of multimedia data and associated additional data to be broadcast together with the multimedia data, comprising:
- selecting a first file containing said multimedia data and a second file containing said associated additional data;
- merging the selected first and second files in a metafile having links to the selected first and second files; and
- streaming the merged files
- changing the selected additional data during streaming.

**11.** Process according to claim 10, **characterized in that** said multimedia data comprises video and/or audio data.

**12.** Process according to claim 10 or 11, **characterized in that** said additional data comprises a set of text data comprising caption data in different languages, said selection step comprising selecting caption data in said languages for a selected multimedia data.

**13.** Process according to any of claims 10 to 12, **characterized in that** the multimedia data comprises MEPG encoded data such as data in the WMV^{®} or WMA^{®} format.

**14.** Process according to any of claims 10 to 13, **characterized in that** the additional data comprises data written under a structured markup language such as a Synchronized Multimedia Integration Language, "SMIL".

**15.** Process according to any of claims 10 to 14, **characterized in that** the metafile is an eXtensible Markup Language metafile such as an Advanced Stream Redirector,"ASX" file.
